# EUROPÄISCHE PATENTSCHRIFT

(11) **EP 3 735 538 B1**
(45) Veröffentlichungstag und Bekanntmachung des Hinweises auf die Patenterteilung: **19.07.2023**
(21) Anmeldenummer: 19710394.8
(22) Anmeldetag: 11.03.2019
(51) Int. Cl.: F15B 1/10, G01M 3/04

(54) **DRUCKSPEICHER MIT EINER ÜBERWACHUNGSEINRICHTUNG**
PRESSURE ACCUMULATOR WITH A MONITORING DEVICE
ACCUMULATEUR DE PRESSION POURVU D'UN ÉQUIPEMENT DE CONTRÔLE

(30) Priorität: 19.03.2018 DE 102018002315
(43) Veröffentlichungstag der Anmeldung: 11.11.2020
(73) Patentinhaber: Hydac Technology GmbH, 66280 Sulzbach (DE)
(72) Erfinder: BALTES, Herbert, 66679 Losheim (DE); KLOFT, Peter, 56235 Ransbach-Baumbach (DE); JOCHUM, Petra, 66287 Quierschied (DE); RAU, Daniel, 66292 Riegelsberg (DE)
(74) Vertreter: Bartels und Partner, Patentanwälte
(86) Internationale Anmeldenummer: PCT/EP2019/055953
(87) Internationale Veröffentlichungsnummer: WO 2019/179800

(56) Entgegenhaltungen:
- WO-A1-2015/113731
- WO-A1-2015/183933
- JP-A- 2011 215 076
- US-A- 3 067 015
- US-A- 3 502 436
- US-A- 4 063 452
- US-A- 4 201 080

## Beschreibung

Die Erfindung betrifft einen Druckspeicher mit einem Speichergehäuse, in dem ein bewegbares Trennelement einen mit einem Arbeitsgas befüllten Gasraum von einem Fluidraum fluiddicht voneinander trennt, wobei eine Überwachungseinrichtung vorgesehen ist, die bei einem die Abdichtwirkung des Trennelements beeinträchtigenden Störfall eine optisch erkennbare Anzeige liefert und die ein Sichtfenster aufweist, durch das ein Indikator beobachtbar ist, der mit dem Gasraum in Verbindung steht und dessen optische Eigenschaften sich bei Benetzung mit dem Fluid erkennbar ändern.

WO 2015/183933 A1 beschreibt einen Druckspeicher mit einem Speichergehäuse, in dem ein bewegbares Trennelement einen mit einem Arbeitsgas befüllten Gasraum von einem Fluidraum fluiddicht voneinander trennt, wobei eine Überwachungseinrichtung vorgesehen ist, die bei einem die Abdichtwirkung des Trennelements beeinträchtigenden Störfall eine optisch erkennbare Anzeige liefert und die ein Sichtfenster aufweist, durch das ein Indikator beobachtbar ist, der mit dem Gasraum in Verbindung steht und dessen optische Eigenschaften sich bei Benetzung mit dem Fluid erkennbar ändern.

Weiterer Stand der Technik ist in US 3 502 436 A, JP 2011 215076 A, US 4 201 080 A, US 3 067 012 A und US 4 063 452 A beschrieben.

Ein derartiger Druckspeicher ist beispielsweise aus WO 2015/113731 A1 bekannt. Durch die Überwachungseinrichtung kann die Funktionsfähigkeit des Druckspeichers bei laufendem Betrieb des Systems überprüft werden, ohne dass der Druckspeicher aus dem System herausgenommen und einer externen Funktionsprüfung unterzogen werden müsste. Vorteilhafterweise ist als Indikator eine Probenmenge an spezieller Glasfaserwolle vorgesehen, die im unbenetzten Zustand weiß ist und bei Benetzung mit Fluiden unterschiedlicher Art sich visuell erkennbar verfärbt. Die Glasfaserwolle ist in einer durch die Wand des Gehäuses zum Gasraum führenden Bohrung zwischen einem das Sichtfenster aufweisenden Gewindeeinsatz und einem Siebkörper am inneren Ende der Bohrung angeordnet. Hinsichtlich der möglichen guten Erkennbarkeit des Indikators nach Anzeige eines Störfalls sowie einer vereinfachten Handhabung und eines bauraumsparenden Aufbaus lässt die bekannte Lösung noch Wünsche offen.

Der Erfindung liegt die Aufgabe zugrunde, die Erkennbarkeit und die Handhabung eines Indikators als Teil einer Überwachungseinrichtung zu vereinfachen sowie einen bauraumsparenden Aufbau zu ermöglichen.

Diese Aufgabe wird gelöst durch einen Druckspeicher mit den Merkmalen des Patentanspruchs 1 in seiner Gesamtheit. Ein erfindungsgemäßer Druckspeicher ist dadurch gekennzeichnet, dass der seine optischen Eigenschaften ändernde Indikator in einer Kapsel aufgenommen ist, deren Kapselwand für den Durchtritt des Fluids durchlässig ist und die zwischen dem Sichtfenster und dem Trennelement im Speichergehäuse angeordnet ist.

Durch die Aufnahme des Indikators in einer Kapsel ist ein kompaktes Bauteil geschaffen, welches in einfacher und bauraumsparender Weise gelagert und transportiert werden kann. Der Einbau, der Ausbau und ein möglicher Wechsel der Kapsel in der Überwachungseinrichtung sind jeweils in wenigen Schritten durchführbar. Die Kapsel ist lose oder ortsfest in Bezug zum Speichergehäuse zwischen dem Sichtfenster und dem Trennelement angeordnet. Dies ermöglicht einen bauraumsparenden Aufbau der gesamten Überwachungseinrichtung, da die Kapsel mit dem darin aufgenommenen Indikator eine geringe Bauhöhe hat. Vorteilhafterweise weist die Kapsel eine flache Grundform auf mit einer größtmöglichen Kapselwand für den Durchtritt des zu detektierenden Fluids. Zur Anordnung in einer Bohrung im Speichergehäuse weist die Kapsel zweckmäßigerweise eine kreisförmige Grundform auf. In praktischen Versuchen hat es sich erwiesen, dass aufgrund der Kapselgestaltung auch eine bessere Erkennbarkeit für den Indikator geschaffen ist gegenüber der bekannten Lösung mit der Glaswolle.

Bei einer bevorzugten Ausführungsform des erfindungsgemäßen Druckspeichers weist die Kapsel in ihrem Inneren ein Pad (Kissen) auf, das den Indikator aufnimmt und das zwischen mindestens einer fluiddurchlässigen Schutzlage aufgenommen ist. Durch die mindestens eine Schutzlage werden mögliche Beschädigungen des Pads durch einen Kontakt mit der Innenwand der Kapsel wirksam vermieden. Die Kapsel umschließt das Pad, welches vorzugsweise aus einem Vlies gebildet ist, vorteilhafterweise nahezu abstandsfrei. Insoweit schützt die jeweilige Schutzlage auch davor, dass ungewollt das Pad aus der Kapsel ausgetragen wird.

Bei einer weiteren bevorzugten Ausführungsform des erfindungsgemäßen Druckspeichers weist die Kapsel einen in Richtung des Sichtfensters vorstehenden, umlaufenden Wannenrand auf zwecks Aufnahme von in dem Fluid gelösten und/oder dispergierten Indikator, der aus Durchlässen in der oberen Kapselschale der Kapsel austritt, und dass Durchlässe in der unteren Kapselschale den Durchtritt des Fluids in die Kapsel mit dem Pad ermöglichen. Das in die Überwachungseinrichtung mit der darin angeordneten Kapsel einströmende Fluid erreicht nach Durchtritt der unteren Kapselschale das Pad und nach Durchtritt der oberen Kapselschale die sich daran anschließende Aufnahmewanne, was einen funktionssicheren Betrieb ermöglicht.

Sobald ein Störfall durch eine Reaktion mit dem Indikator detektiert wird, weist das an der oberen Kapselschale austretende Fluid die Farbe entsprechend der bei Benetzung mit dem Fluid geänderten optischen Eigenschaften des Indikators auf. Von Vorteil ist hier eine Signalfarbe, welche eine große Leuchtkraft besitzt und von einer Bedienperson durch das Sichtfenster hindurch gut erkennbar ist. Hierbei ist zu berücksichtigen, dass das Innere des Speichergehäuses unbeleuchtet ist, weshalb die Kapsel mit dem darin aufgenommenen Indikator vorzugsweise räumlich nahe zum Sichtfenster angeordnet ist. Dies ermöglicht die Nutzung von von außen einfallendem Licht zur Beobachtung eines Signals im Störfall.

Bei einer bevorzugten Ausführungsform des erfindungsgemäßen Druckspeichers ist der Wannenrand der Kapsel aus einem seitlichen Rand der unteren Kapselschale gebildet, der über die obere Kapselschale unter Bildung einer Aufnahmewanne axial vorsteht. Der in Richtung des Sichtfensters vorstehende Wannenrand erlaubt die Auflage einer durchsichtigen Abdeckung, welche einerseits die Wanne als Raum für das an der oberen Kapselschale der Kapsel austretende Fluid abschließt und andererseits eine Beobachtung des Fluids ermöglicht. Es ist auch denkbar, das Sichtfenster unmittelbar an den Wannenrand der Kapsel anschließend anzuordnen. Die über die obere Kapselschale axial vorstehende untere Kapselschale umgreift diese in der Art einer Klammer entlang des kompletten Außenrandes und dient vorzugsweise zudem einer sicheren Aneinanderlage der beiden Kapselschalen. Die genannte Abdeckung nebst Wanne verhindern ein ungewolltes Verflüchtigen der Indikatorsubstanz aus der Überwachungseinrichtung.

Weiter ist vorteilhaft, dass die Aufnahmewanne von einem Deckelteil überspannt ist, der durchsichtig gehalten den Blick von dem Sichtfenster zumindest auf den Wanneninhalt freigibt. Das vom Indikator kommend aus der Kapsel in die Wanne strömende Fluid kann durch das Deckelteil hindurch überwacht und eine Änderung seiner optischen Eigenschaften, wie ein Farbumschlag unter Bildung einer Signalfarbe, als Signal für einen Störfall erkannt werden.

Besonders bevorzugt ist das Deckelteil mit optischen Eigenschaften, wie prismatischen Eigenschaften, einer Beschichtung oder einer Vergrößerung versehen. Die optischen Eigenschaften des Deckelteils sind anforderungsgerecht gewählt, um eine Beobachtung des Wanneninhalts durch das Deckelteil hindurch zu erleichtern. Neben einer Vergrößerung ist insbesondere die Verstärkung von Kontrasten zur Erkennung einer Änderung der optischen Eigenschaften des Fluids von Vorteil, wozu auch eine etwaige Beschichtung mit beiträgt.

Bei einer bevorzugten Ausführungsform des erfindungsgemäßen Druckspeichers ist das Sichtfenster aus einem Schauglas gebildet, das in ein deckelseitiges Abschlussteil des Speichergehäuses eingebracht ist und den Blick von außen auf die Kapsel als zentralem Bestandteil der Überwachungseinrichtung freigibt. Zweckmäßigerweise ist das Schauglas am äußeren Ende einer Bohrung im Speichergehäuse respektive Abschlussteil angeordnet, besonders bevorzugt mit einem Innengewinde der Bohrung verschraubt oder verklebt.

Bei einer weiteren bevorzugten Ausführungsform des erfindungsgemäßen Druckspeichers sind das Deckelteil und die Kapsel mit dem Indikatorpad von einem Siebkörper gehalten, der vonseiten des Trennelements aus in das deckelartige Abschlussteil des Speichergehäuses einsetzbar und insbesondere mittels eines Schraubeinsatzes auf Position gehalten ist. Die einzelnen Komponenten der Überwachungseinrichtung lassen sich auf diese Weise einfach und kompakt in einen Bauraum, wie das Innere einer im Abschlussteil eingebrachten Bohrung, einsetzen. Besonders bevorzugt ist der Schraubeinsatz zur Lagefixierung des Siebkörpers am unteren Ende der Bohrung angeordnet. Vorteilhafterweise sind die Komponenten rotationssymmetrisch zur Symmetrieachse der Bohrung ausgebildet und angeordnet.

Entlang der axialen Erstreckung der Bohrung sind nacheinander von außen nach innen das Sichtfenster, das Deckelteil, die Kapsel mit dem Indikator und der Siebkörper angeordnet. Der Siebkörper ermöglicht einen Fluiddurchtritt des zu detektierenden Mediums zur Kapsel mit dem Indikatorpad. Anstelle des Siebkörpers kann auch ein fluiddurchlässiges Membranteil eingesetzt werden.

Bei einer weiteren bevorzugten Ausführungsform der Erfindung führt der Indikator bei Berührung mit dem Fluid, ausgehend von einer Neutralfarbe, zu einem sichtbaren Farbumschlag unter Bildung einer Signalfarbe und der Indikator ist aus der Stoffgruppe der (Diethylamino)benzo[a]phenoxazine ausgewählt. Durch den Farbumschlag von der Neutralfarbe zur Signalfarbe, welche in einem deutlichen Farbkontrast zur Neutralfarbe steht, wird ein Warnsignal für einen von der Überwachungseinrichtung festgestellten Störfall erzeugt. Beispielsweise kann ein Farbumschlag von Weiß zu Rot, Grün oder Blau stattfinden. Aufgrund des Farbumschlages hin zu einer auffälligen Farbe mit Signalwirkung ist der durch den chemischen Indikator angezeigte Störfall von einer Bedienperson kaum zu übersehen. Besonders bevorzugt ist die Molekülformel des chemischen Indikators C₂₀H₁₈N₂O₂. Dieses auch den chemischen Namen "Nil Red" tragende Reagenz erzeugt bei einer Reaktion mit dem zugehörigen zu detektierenden Medium die nicht zu übersehende Signalfarbe Rot.

Weiter ist vorteilhaft, dass das Pad für den Indikator ein Vlies, vorzugsweise ein Glasfaservlies, oder ein Glasfasergewebe, insbesondere ein Glasseidengewebe, ist. Ein Vlies (non-woven) oder auch eine Watte weist in der Regel die Neutralfarbe Weiß auf, so dass bei Verwendung eines chemischen Indikators wie "Nil Red" oder dergleichen ein gut sichtbarer Farbumschlag unter Bildung der Signalfarbe Rot gewährleistet ist. Des Weiteren lässt sich ein Pad in einfacher Weise aus einem Vlies oder Glasfasergewebe in besonders günstiger Weise, herstellen.

Weitere Vorteile und Merkmale der Erfindung ergeben sich aus den Figuren und der nachfolgenden Beschreibung der Zeichnung. Die vorstehend genannten und die weiter angeführten Merkmale können erfindungsgemäß jeweils einzeln oder in beliebigen Kombinationen an einem erfindungsgemäßen Druckspeicher realisiert sein. Die in den Figuren gezeigten Merkmale sind rein schematisch und nicht maßstäblich zu verstehen. Es zeigen:
- Fig. 1: ein Ausführungsbeispiel des erfindungsgemäßen Druckspeichers, gezeigt im Schnitt;
- Fig. 2: eine vergrößerte Darstellung der im Druckspeicher aus Fig. 1 angeordneten Überwachungseinrichtung; und
- Fig. 3: einen vergrößerten Teilbereich einer beispielhaften, erfindungsgemäßen Überwachungseinrichtung zur Veranschaulichung des Aufbaus der Kapsel mit dem darin aufgenommenen Indikatorpad.

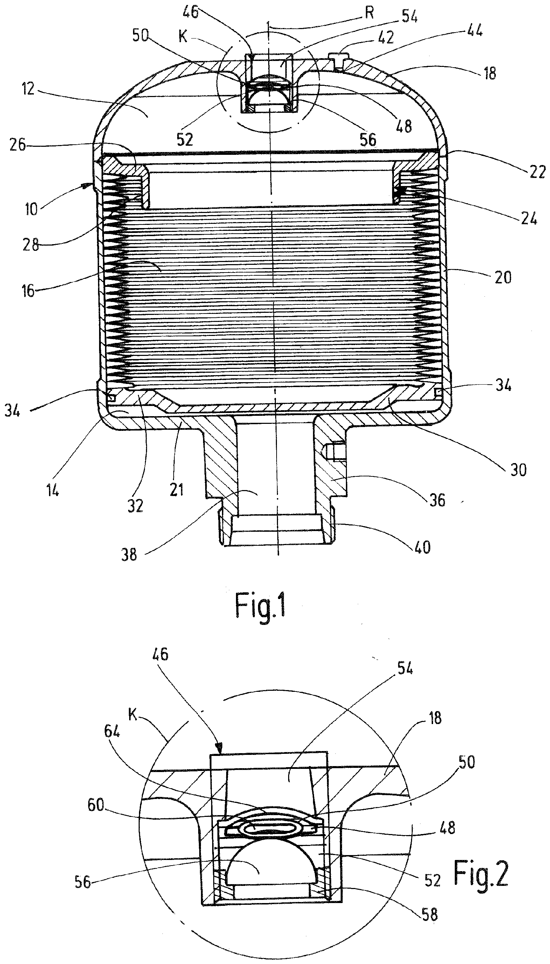

Fig. 1 zeigt im Schnitt einen Druckspeicher mit einem Speichergehäuse 10 mit einem mit einem Arbeitsgas befüllten Gasraum 12 und einem Fluidraum 14, die über ein bewegbares Trennelement 16 fluiddicht voneinander getrennt sind. Das Speichergehäuse 10 des rotationssymmetrisch zu einer Rotationsachse R ausgebildeten Druckspeichers umfasst ein deckelseitiges Abschlussteil 18 und ein rohrzylinderförmiges Hauptteil 20 mit einem Boden 21. Das Abschlussteil 18 und das Hauptteil 20 sind an einer umlaufenden, schmalen Befestigungsfläche 22 miteinander verschweißt. Der Gasraum 12 ist in dem dem Abschlussteil 18 zugeordneten Teil des Speichergehäuses 10 angeordnet. Im Bereich der Verbindung des Abschlussteils 18 mit dem Hauptteil 20 ist ein ringförmiges Einsatzteil 24 mit einem horizontalen ersten Abschnitt 26 und einem zum Fluidraum 14 gerichteten vertikalen zweiten Abschnitt 28 vorgesehen.

Die vertikale Richtung ist durch die Rotationsachse R des Druckspeichers vorgegeben. Der erste Abschnitt 26 bildet eine obere Befestigungsstelle für das als Faltenbalg ausgebildete Trennelement 16. Das untere Ende des Trennelements 16 ist an einem Plattenteil 30 befestigt, welches im Inneren des Druckspeichers bewegbar angeordnet ist und dem inneren Querschnitt des Speichergehäuses 10 entsprechend einen kreisförmigen Querschnitt aufweist. In dem in Fig. 1 gezeigten unbenutzten Zustand des Druckspeichers weist das Trennelement 16 die maximale Erstreckung in axialer Richtung auf und das Plattenteil 30 ist nahe zum Boden 21 des Speichergehäuses 10 angeordnet. In einem Randabschnitt 32 des Plattenteils 30 weist dieses eine etwas größere Dicke gegenüber dem Hauptteil in der Mitte auf. Am Randabschnitt 32 sind mehrere zur Innenwand des Speichergehäuses 10 gerichtete Führungen 34 ausgebildet, die eine hemnisfreie axiale Bewegung des Plattenteils 30 im Druckspeicher erleichtern.

An den Boden 21 des Speichergehäuses 10 schließt sich ein fortsatzartiger Anschlusskörper 36 an, in welchem ein in den Fluidraum 14 mündender Fluidanschluss 38 ausgebildet ist. Um den Fluidanschluss 38 mit einer in Fig. 1 nicht gezeigten Schraubkappe zu verschließen, ist am unteren Ende des Anschlusskörpers 36 ein Außengewinde 40 ausgebildet, das ansonsten dem Anschluss einer nicht dargestellten Fluidleitung dient, an die der Balgspeicher anschließbar ist. Im deckelseitigen Abschlussteil 18 des Speichergehäuses 10 ist versetzt zur Rotationsachse R ein mit einem Stutzen 42 gasdicht verschlossener Füllanschluss 44 zur Befüllung des Gasraumes 12 ausgebildet.

Zentraler Bestandteil des Druckspeichers ist eine Überwachungseinrichtung 46, die rotationssymmetrisch zur Symmetrieachse R in einen ins Innere des Speichergehäuses 10 ragenden Fortsatz des deckelseitigen Abschlussteils 18 eingebracht ist. Die Überwachungseinrichtung 46 liefert bei einem die Abdichtwirkung des Trennelements 16 beeinträchtigenden Störfall, in welchem Fluid aus dem Fluidraum 14 in den Gasraum 12 übertritt, eine optische erkennbare Anzeige. Hierfür weist die Überwachungseinrichtung 46 einen in eine Kapsel 48 aufgenommenen Indikator auf, der bei Vernetzung mit dem im Gasraum 12 unerwünschten Fluid seine optischen Eigenschaften erkennbar ändert. Eine Kapselwand 50 ist für den Durchtritt des Fluids durchlässig ausgebildet.

Zur Beobachtung des Indikators sowie einer Änderung seiner optischen Eigenschaften ist am außenseitigen Ende der Überwachungseinrichtung 46, welche in einer Durchgangsbohrung 52 im Abschlussteil 18 angeordnet ist, ein Sichtfenster 54 angeordnet. Das Sichtfenster 54 ist vorzugsweise aus einem bruchsicheren Schauglas gebildet und gibt den Blick von außen auf die Kapsel 48 frei. Zur Lagefixierung der Kapsel 48 ist am innenseitigen, dem Trennelement 16 zugeordneten Ende der Überwachungseinrichtung 46 ein Siebkörper 56 angeordnet, der von Seiten des Trennelements 16 aus in das deckelartige Abschlussteil 18 eingesetzt und dort mittels eines Schraubeinsatzes 58 auf Position gehalten ist. Die Kapsel 48 mit dem seine optischen Eigenschaften ändernden Indikator ist zwischen dem Sichtfenster 54 und dem Trennelement 16 im Speichergehäuse 10 angeordnet und durch den Siebkörper 56 in seiner Lage gehalten.

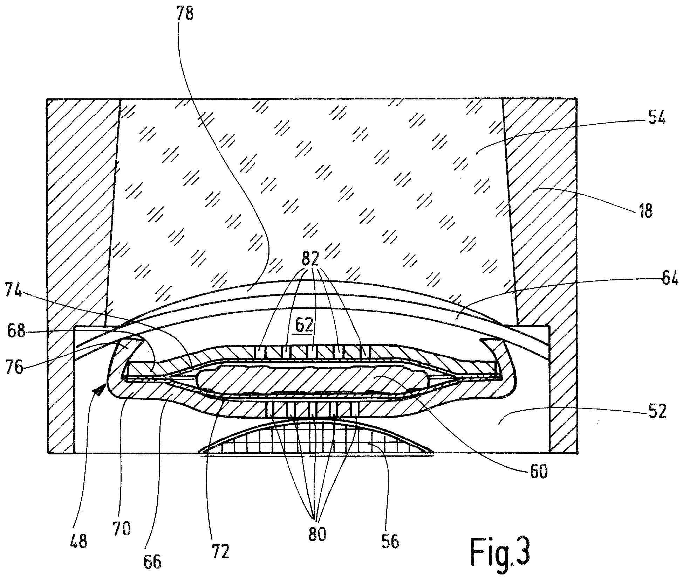

Fig. 2 zeigt in vergrößerter Darstellung entsprechend dem kreisförmigen Ausschnitt K die Überwachungseinrichtung 46 aus Fig. 1 mit dem Sichtfenster 54, der Kapsel 48 und dem Siebkörper 56 samt Schraubeinsatz 58. Fig. 2 verdeutlicht, dass die Kapsel 48 in ihrem Inneren ein flaches Pad 60 (Kissen) aufnimmt, dass wiederum den Indikator aufnimmt und ein Vlies, vorzugsweise ein Glasfaservlies, oder ein Glasgewebe, insbesondere ein Glasseidengewebe, ist. Der Indikator ist ein in das Pad 60 aufgenommenes Reagenz, welches bei Berührung mit dem Fluid seine optischen Eigenschaften ändert, vorzugsweise ausgehend von einer Neutralfarbe zu einem sichtbaren Farbumschlag unter Bildung einer Signalfarbe führt. Vorzugsweise ist der Indikator aus der Stoffgruppe der (Diethylamino)benzo[a]phenoxazine ausgewählt, was einen Farbumschlag zur Signalfarbe Rot bewirkt. Um einen Kontakt des Pads 60 und eine Reaktion des Indikators mit dem zu detektierenden Fluid zu ermöglichen, ist die Kapselwand 50 für den Durchtritt des Fluids mit Durchlässen 80, 82 (vgl. Fig. 3) versehen.

Oberhalb der Kapsel 48 ist eine Aufnahmewanne 62 für das an der Oberseite des Pads 60 austretende Fluid ausgebildet. Die Aufnahmewanne 62 ist von einem nach oben gewölbten Deckelteil 64 überspannt, der durchsichtig gehalten den Blick von dem Sichtfenster 54 zumindest auf den Wanneninhalt freigibt. Das Deckelteil 64 ist mit optischen Eigenschaften, wie prismatischen Eigenschaften, einer Beschichtung oder einer Vergrößerung, versehen. Dies ermöglicht in einfacher und zuverlässiger Weise die Beobachtung eines optisch veränderten, vorzugsweise verfärbten Fluids an der Oberseite der Kapsel 58, was einen Störfall aufgrund eines Defektes am Trennelement 16 anzeigt. Der Farbumschlag zu einer Signalfarbe hin ist durch das Sichtfenster 54 hindurch deutlich, auch bei Tageslicht, beobachtbar. Die Überwachungseinrichtung 46 ermöglicht eine zerstörungsfreie, werkzeuglose Sichtprüfung des im Speichergehäuse 10 angeordneten Trennelements 16 im laufenden Betreib sowie während einer Wartung. Insbesondere durch die Wannengestaltung der Kapsel 48 in ihrem oberen Bereich ist die Indikatorfläche deutlich vergrößert, was zu einer verbesserten Erkennbarkeit des Farbumschlages gegenüber bekannten Lösungen führt. Fig. 3 zeigt im Detail die Ausgestaltung der Kapsel 48 insbesonders als Teil der Überwachungseinrichtung 46, welche vom Siebkörper 56 beispielsweise in der Durchgangsbohrung 52 eines Abschlussteils 18 oder eines andersartigen Bauteils ortsfest gehalten ist. Die Kapsel 48 weist eine untere Kapselschale 66 und eine obere Kapselschale 68 auf, die im mittleren Hauptteil der Kapsel 48 parallel zueinander angeordnet das Pad 60 umschließen und im Randbereich 70 aneinandergelegt sind. Im Randbereich 70 fixieren die beiden Kapselschalen 66, 68 zwischen sich eine untere fluiddurchlässige Schutzlage 72 und eine obere fluiddurchlässige Schutzlage 74. Zwischen den beiden fluiddurchlässigen Schutzlagen 72, 74 ist das Pad 60 aufgenommen. Die untere Kapselschale 66 ist gegenüber der oberen Kapselschale 68 verbreitert und mit ihrem seitlichen Rand nach oben gebogen. Auf diese Weise steht die untere Kapselschale 66 über die obere Kapselschale 68 unter Bildung der Aufnahmewanne 62 vor. Der seitliche Rand der unteren Kapselschale 68 bildet einen Wannenrand 76, der als Auflage für das Deckelteil 64 zum Überspannen der Aufnahmewanne 62 dient. An das Deckelteil 64 schließt sich das Sichtfenster 54 an, wobei zwischen dem Deckelteil 64 und dem Sichtfenster 54 ein schmaler Zwischenraum 78 verbleibt. Es ist auch vorstellbar, das Sichtfenster 54 unter Wegfall des Zwischenraumes 78 flächig anliegend am Deckelteil 64 anzuordnen. Weiter ist denkbar, die durch das Deckelteil 64 eingestellten optischen Eigenschaften in das Sichtfenster 54 zu integrieren, beispielsweise an der unteren, der Kapsel 48 zugeordneten Seite eine Beschichtung vorzusehen und das Sichtfenster 54 direkt auf den Wannenrand 76 aufzusetzen.

In den beiden Kapselschalen 66, 68 sind jeweils eine Vielzahl von Durchlässen 80 und 82 ausgebildet, welche jeweils einen Durchtritt des Fluids ohne bzw. mit Indikator ermöglichen. Im Falle eines Störfalls erreicht beispielsweise von einem Gasraum 12 (vgl. Fig. 1) kommend das Fluid durch den Siebkörper 56 hindurch die Kapsel 48. Durch die Durchlässe 80 in der unteren Kapselschale 66 und die untere fluiddurchlässige Schutzlage 72 hindurch erreicht das Fluid das Pad 60 mit dem darin aufgenommenen Indikator. Durch Reaktion mit dem Indikator ändert das Fluid seine optischen Eigenschaften und nimmt vorteilhafterweise eine Signalfarbe, wie Rot, an. Vom Pad 60 aus erreicht das Fluid bei weiterer Ausbreitung durch die obere fluiddurchlässige Schutzlage 74 und die weiteren Durchlässe 82 in der oberen Kapselschale 68 hindurch die Aufnahmewanne 62. Das verfärbte Fluid als Wanneninhalt ist durch das transparente Sichtfenster 54 und das durchsichtig gehaltene Deckelteil 64 hindurch von einem Beobachter deutlich als Signal für einen Störfall erkennbar.

Die erfindungsgemäße Lösung ist nicht auf die Verwendung von Balgspeichern eingeschränkt, sondern kann für alle Arten von Druckspeichern, wie beispielsweise Kolben-, Blasen-, Membranspeichern, eingesetzt werden, bei denen ein bewegbares Trennelement einen Gas- Arbeitsraum von einem Fluidraum separiert.

## Patentansprüche

1. Druckspeicher mit einem Speichergehäuse (10), in dem ein bewegbares Trennelement (16) einen mit einem Arbeitsgas befüllten Gasraum (12) von einem Fluidraum (14) fluiddicht voneinander trennt, wobei eine Überwachungseinrichtung (46) vorgesehen ist, die bei einem die Abdichtwirkung des Trennelements (16) beeinträchtigenden Störfall eine optisch erkennbare Anzeige liefert und die ein Sichtfenster (54) aufweist, durch das ein Indikator beobachtbar ist, der mit dem Gasraum (12) in Verbindung steht und dessen optische Eigenschaften sich bei Benetzung mit dem Fluid erkennbar ändern, **dadurch gekennzeichnet, dass** der seine optischen Eigenschaften ändernde Indikator in einer Kapsel (48) aufgenommen ist, deren Kapselwand (50) für den Durchtritt des Fluids durchlässig ist und die zwischen dem Sichtfenster (54) und dem Trennelement (16) im Speichergehäuse (10) angeordnet ist.

2. Druckspeicher nach Anspruch 1, **dadurch gekennzeichnet, dass** die Kapsel (48) in ihrem Inneren ein Pad (60) aufweist, das den Indikator aufnimmt und das zwischen mindestens einer fluiddurchlässigen Schutzlage (72, 74) aufgenommen ist.

3. Druckspeicher nach Anspruch 2, **dadurch gekennzeichnet, dass** die Kapsel (48) einen in Richtung des Sichtfensters (54) vorstehenden, umlaufenden Wannenrand (76) aufweist zwecks Aufnahme von in dem Fluid gelösten und/oder dispergierten Indikator, der aus Durchlässen (82) in der oberen Kapselschale (68) der Kapsel (48) austritt, und dass Durchlässe (80) in der unteren Kapselschale (66) den Durchtritt des Fluids in die Kapsel (48) mit dem Pad (60) ermöglichen.

4. Druckspeicher nach Anspruch 3, **dadurch gekennzeichnet, dass** der Wannenrand (76) der Kapsel (48) aus einem seitlichen Rand der unteren Kapselschale (66) gebildet ist, der über die obere Kapselschale (68) unter Bildung einer Aufnahmewanne (62) axial vorsteht.

5. Druckspeicher nach Anspruch 4, **dadurch gekennzeichnet, dass** die Aufnahmewanne (62) von einem Deckelteil (64) überspannt ist, der durchsichtig gehalten den Blick von dem Sichtfenster (54) zumindest auf den Wanneninhalt freigibt.

6. Druckspeicher nach Anspruch 5, **dadurch gekennzeichnet, dass** das Deckelteil (64) mit optischen Eigen-schaften, wie prismatischen Eigenschaften, einer Beschichtung oder einer Vergrößerung versehen ist.

7. Druckspeicher nach einem der vorstehenden Ansprüche, **dadurch gekennzeichnet, dass** das Sichtfenster (54) aus einem Schauglas gebildet ist, das in ein deckelseitiges Abschlussteil (18) des Speichergehäuses (10) eingebracht ist und den Blick von außen auf die Kapsel (48) freigibt.

8. Druckspeicher nach einem der Ansprüche 5 bis 6 und Anspruch 7, **dadurch**
**gekennzeichnet, dass** das Deckelteil (64) und die Kapsel (48) mit dem Indikatorpad (60) von einem Siebkörper (56) gehalten sind, der vonseiten des Trennelements (16) aus in das deckelartige Abschlussteil (18) des Speichergehäuses (10) einsetzbar und insbesondere mittels eines Schraubeinsatzes (58) auf Position gehalten ist.

9. Druckspeicher nach einem der vorstehenden Ansprüche, **dadurch gekennzeichnet, dass** der Indikator bei Berührung mit dem Fluid, ausgehend von einer Neutralfarbe, zu einem sichtbaren Farbumschlag unter Bildung einer Signalfarbe führt und er aus der Stoffgruppe der (Diethylamino)benzo[a]phenoxazine ausgewählt ist.

10. Druckspeicher nach einem der Ansprüche 2 bis 6, 8, **dadurch**
**gekennzeichnet, dass** das Pad (60) für den Indikator ein Vlies, vorzugsweise ein Glasfaservlies, oder ein Glasfasergewebe, insbesondere ein Glasseidengewebe, ist.

## Claims

1. Pressure accumulator having an accumulator housing (10) in which a movable separating element (16) separates a gas chamber (12) filled with a working gas from a fluid chamber (14) in a fluid-tight manner, wherein a monitoring device (46) is provided which, in the event of a fault impairing the sealing effect of the separating element (16), provides a visually detectable indication and which has a viewing window (54) through which an indicator can be observed, said indicator being in communication with the gas chamber (12) and the optical properties of which detectably change on wetting with the fluid, **characterised in that** the indicator changing its optical properties is accommodated in a capsule (48), the capsule wall (50) of which is permeable to passage of the fluid and which is arranged between the viewing window (54) and the separating element (16) in the accumulator housing (10).

2. Pressure accumulator according to claim 1, **characterised in that** the capsule (48) has a pad in its interior (60) which receives the indicator and is accommodated between at least one fluid-permeable protective layer (72, 74).

3. Pressure accumulator according to claim 2, **characterised in that** the capsule (48) has a circumferential tray edge (76) protruding towards the viewing window (54) for the purpose of receiving indicator dissolved and/or dispersed in the fluid which exits from apertures (82) in the upper capsule shell (68) of the capsule (48), and **in that** apertures (80) in the lower capsule shell (66) enable the fluid to pass through into the capsule (48) with the pad (60).

4. Pressure accumulator according to claim 3, **characterised in that** the tray edge (76) of the capsule (48) is formed from a lateral edge of the lower capsule shell (66) which protrudes axially above the upper capsule shell (68) to form a receiving tray (62).

5. Pressure accumulator according to claim 4, **characterised in that** the receiving tray (62) is spanned by a cover member (64) which, kept transparent, allows viewing from the viewing window (54) at least of the tray contents.

6. Pressure accumulator according to claim 5, **characterised in that** the cover member (64) is provided with optical properties, such as prismatic properties, a coating or a magnification.

7. Pressure accumulator according to one of the preceding claims, **characterised in that** the viewing window (54) is formed from a sight glass which is introduced into a cover-side end member (18) of the accumulator housing (10) and allows the capsule (48) to be viewed from outside.

8. Pressure accumulator according to one of claims 5 to 6 and claim 7, **characterised in that** the cover member (64) and the capsule (48) with the indicator pad (60) are held by a screen body (56) which can be inserted from the side of the separating element (16) into the cover-like end member (18) of the accumulator housing (10) and in particular is held in position by means of a screwed insert (58).

9. Pressure accumulator according to one of the preceding claims, **characterised in that**, starting from a neutral colour, the indicator, on contact with the fluid, leads to a visible colour change by forming a signal colour and is selected from the group of substances comprising (diethylamino)benzo[a]phenoxazines.

10. Pressure accumulator according to one of claims 2 to 6, 8, **characterised in that** the pad (60) for the indicator is a non-woven fabric, preferably a fibreglass non-woven fabric, or a fibreglass fabric, in particular a woven glass fabric.

## Revendications

1. Accumulateur de pression comprenant une enveloppe (10) d'accumulateur, dans lequel un élément (16) de séparation sépare l'un de l'autre, d'une manière étanche au fluide, un espace (12) pour du gaz empli d'un gaz de travail, d'un espace (14) pour du fluide, dans lequel il est prévu un dispositif (46) de contrôle, qui, s'il se produit une perturbation préjudiciable à l'effet d'étanchéité de l'élément (16) de séparation, fournit une indication détectable optiquement et qui a un hublot (54) de vue, par lequel peut être observé un indicateur, qui est en liaison avec l'espace (12) pour du gaz et dont les propriétés optiques se modifient d'une manière détectable au mouillage par le fluide, **caractérisé en ce que** l'indicateur modifiant ses propriétés optiques est reçu dans une capsule (48), dont la paroi (50) est perméable pour le passage du fluide et qui est disposée entre le hublot (54) de vue et l'élément (16) de séparation dans l'enveloppe (10) de l'accumulateur.

2. Accumulateur de pression suivant la revendication 1, **caractérisé en ce que** la capsule (48) a, à l'intérieur, un tampon (60), qui reçoit l'indicateur et qui est reçu entre au moins une couche (72, 74) de protection perméable au fluide.

3. Accumulateur de pression suivant la revendication 2, **caractérisé en ce que** la capsule (48) a un bord (76) de cuvette faisant le tour, en saillie dans la direction du hublot (54) de vue, en vue de la réception d'un indicateur dissout et/ou dispersé dans le fluide, qui sort par des traversées (82) dans la coquille (68) supérieure de la capsule (48), et **en ce que** des traversées (80) dans la coquille (66) inférieure de la capsule rendent possible le passage du fluide dans la capsule (48) par le tampon (60).

4. Accumulateur de pression suivant la revendication 3, **caractérisé en ce que** le bord (76) de la cuvette de la capsule (48) est formé d'un bord latéral de la coquille (66) inférieure de la capsule, qui fait saillie de la coquille (68) supérieure de la capsule avec formation d'une cuvette (62) de réception.

5. Accumulateur de pression suivant la revendication 4, **caractérisé en ce que** la cuvette (62) de réception est surmontée d'une partie (64) de couvercle, qui, maintenue transparente, dégage la vue par le hublot (54) de vue au moins sur l'intérieur de la cuvette.

6. Accumulateur de pression suivant la revendication 5, **caractérisé en ce que** la partie (64) de couvercle est pourvue de propriétés optiques, comme des propriétés prismatiques, d'un revêtement ou d'un grossissement.

7. Accumulateur de pression suivant l'une des revendications précédentes, **caractérisé en ce que** le hublot (54) de vue est en un verre - regard, qui est introduit dans la partie (18) de fermeture du côté du couvercle de l'enveloppe (10) de l'accumulateur et qui dégage la vue de l'extérieur sur la capsule (48).

8. Accumulateur de pression suivant l'une des revendications 5 à 6 et 7, **caractérisé en ce que** la partie (64) de couvercle et la capsule (48) sont maintenues avec le tampon (60) indicateur par une pièce (56) formant tamis, qui peut être insérée à partir du côté de l'élément (16) de séparation dans la partie (18) de fermeture de type en couvercle de l'enveloppe (10) de l'accumulateur et qui peut être maintenue en position, en particulier au moyen d'un insert (58) vissé.

9. Accumulateur de pression suivant l'une des revendications précédentes, **caractérisé en ce que** l'indicateur au contact avec le fluide passe d'une couleur neutre à un virage de couleur visible, avec formation d'une couleur de signal et il est choisi dans le groupe de substances de la (diéthylamino)benzo[a]phénoxazine.

10. Accumulateur de pression suivant l'une des revendications 2 à 6,8, **caractérisé en ce que** le tampon (60) pour l'indicateur est un non tissé, de préférence un non tissé de fibres de verre ou un tissé de fibres de verre, notamment un tissé de silionne.
